# EUROPÄISCHE PATENTSCHRIFT

(11) **EP 1 277 637 B1**
(45) Veröffentlichungstag und Bekanntmachung des Hinweises auf die Patenterteilung: **12.11.2003**
(21) Anmeldenummer: 02450083.7
(22) Anmeldetag: 11.04.2002
(51) Int. Cl.: B61B 12/02, F16H 55/50

(54) **Rolle für ein Laufwerk bzw. für eine Rollenbatterie**
Pulley for a running gear or for a guiding pulley array
Poulie pour un train de roues ou pour un balancier

(30) Priorität: 19.07.2001 AT 11232001
(43) Veröffentlichungstag der Anmeldung: 22.01.2003
(73) Patentinhaber: Innova Patent GmbH, 6960 Wolfurt (AT)
(72) Erfinder: Meindl, Bernd, Ing., 6971 Hard (AT)
(74) Vertreter: Atzwanger, Richard, Dipl.-Ing. Patentanwalt

(56) Entgegenhaltungen:
- CH-A- 641 254
- DE-A- 2 529 890
- GB-A- 418 549
- US-A- 2 212 779

## Beschreibung

Die gegenständliche Erfindung betrifft eine Rolle für ein Laufwerk bzw. für eine Rollenbatterie in einer Seilbahnanlage mit einem Rollenkörper, welcher mit einer zentralen Bohrung ausgebildet ist, in welcher sich ein Lager befindet und welche mit zwei Bordscheiben versehen ist, zwischen welchen sich eine nahezu nicht elastisch verformbare, ringförmige Auflage für ein Seil der Seilbahnanlage befindet, wobei mindestens eine der Bordscheiben am Rollenkörper dadurch lösbar befestigbar ist, daß die äußere Umfangsfläche des Rollenkörpers im Bereich ihrer anliegenden Stirnfläche mit mindestens einer ringsumlaufenden Nut für einen Federring od.dgl. ausgebildet ist.

Da bei derartigen Rollen das Erfordernis besteht, daß die Auflage in sich geschlossen ist, muß diese auf den Rollenkörper in axialer Richtung aufgeschoben werden. Hierfür besteht jedoch das Erfordernis, mindestens die eine der beiden Bordscheiben am Rollenkörper lösbar zu befestigen. Hiezu ist es bekannt, die beiden Bordscheiben mittels mehrerer Spannbolzen, welche die Auflage und die beiden Bordscheiben durchsetzen, miteinander lösbar zu verbinden siehe z.B. CH-PS-641 254. Eine derartige Befestigung der Bordscheiben entspricht jedoch deshalb nicht den Erfordernissen, da hierdurch die Auflage geschwächt wird, wodurch deren Festigkeit und somit auch deren Lebensdauer vermindert wird und da zudem deren Montage bzw. Demontage aufwendig ist.
Es ist weiters auch bekannt, am Rollenkörper mindestens eine ringsumlaufende Nut vorzusehen, in welche ein Federring eingesetzt ist. Soferne dabei die Auflage aus einem elastischen Material, insbesondere aus Hartgummi, hergestellt ist, wird dabei die Bordscheibe mittels der Auflage auf den Federring gepreßt, wodurch sie in ihrer Lage gehalten wird.

Soferne es jedoch aufgrund der sehr großen Belastungen, welchen die Auflage unterliegt, erforderlich ist, diese aus einem sehr harten Material herzustellen, ist die Auflage nicht hinreichend elastisch verformbar, daß durch sie die Bordscheibe an den Federring angepreßt wird.

Der gegenständlichen Erfindung liegt somit die Aufgabe zugrunde, Maßnahmen zu treffen, durch welche auch bei einer sehr harten, nahezu nicht elastisch verformbaren Auflage die erforderliche Anpressung der Bordscheibe an den Federring bewirkt wird. Dies wird erfindungsgemäß dadurch erzielt, daß zwischen der Auflage und mindestens einer der Bordscheiben ein federnder Einsatz angeordnet ist.

Die Montage der Auflage erfolgt dabei dadurch, daß diese auf den Rollenkörper in axialer Richtung aufgeschoben wird, daß weiters axial außerhalb derselben der mindestens eine federnde Einsatz angeordnet wird, daß hierauf die mindestens eine Bordscheibe auf den Rollenkörper ebenfalls in axialer Richtung und entgegen der Wirkung des federnden Einsatzes aufgeschoben wird und daß schließlich in die ringsumlaufende Nut ein Federring od.dgl. eingesetzt wird. Da der mindestens eine federnde Einsatz die Bordscheibe gegen den Federring preßt, wird hierdurch die Bordscheibe am Rollenkörper gehalten.
Bei einer allfälligen Demontage, um die ringförmige Auflage austauschen zu können, braucht nur der Federring od.dgl. entfernt zu werden, worauf auch die Bordscheibe abgenommen werden kann.

Vorzugsweise ist mindestens eine der beiden Bordscheiben an ihrer Innenseite mit einer Ausnehmung, Hinterschneidung od.dgl. ausgebildet, in welcher der federnde Einsatz gehalten ist. Nach einer bevorzugten Ausführungsform ist der federnde Einsatz durch einen Gummiring gebildet. Zudem sind vorzugsweise die Bordscheiben längs ihrer radial inneren Umrandungen mit Ausnehmungen ausgebildet, durch welche Kondenswasser abfließen kann.

Der Gegenstand der Erfindung ist nachstehend anhand eines in der Zeichnung dargestellten Ausführungsbeispiels näher erläutert. Es zeigen:

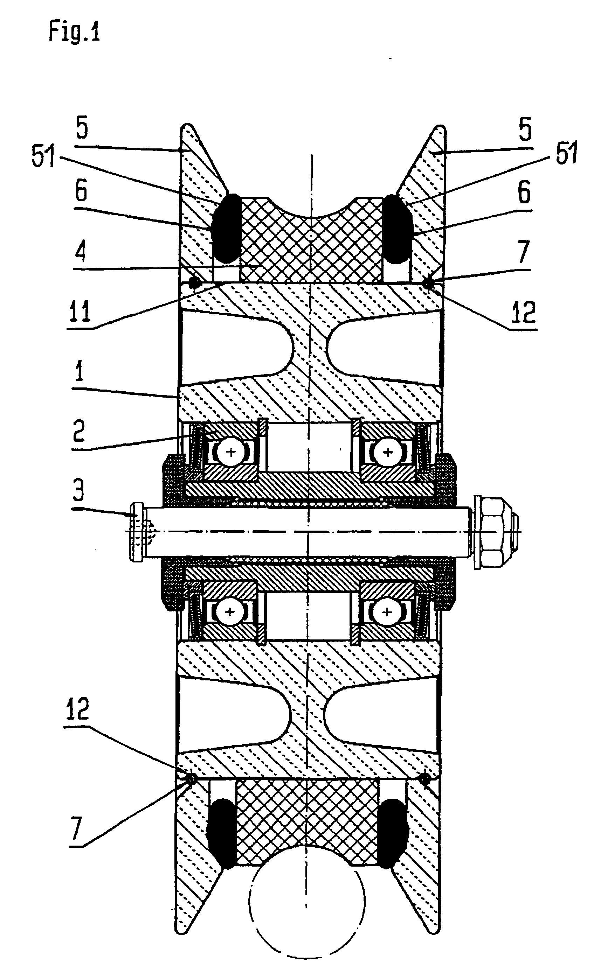

- Fig.1: eine erfindungsgemäße Rolle, in axialem Schnitt;
- Fig.2: die Bordscheibe gemäß Fig. 1 in Draufsicht und in gegenüber Fig.1 verkleinertem Maßstab;
- Fig.3: ein Detail dieser Rolle gemäß Fig. bei der Montage einer der beiden Bordscheiben, in gegenüber Fig. verkleinertem Maßstab; und
- Fig.4: das Detail gemäß Fig. 3, am Ende der Montage.

Eine erfindungsgemäße Rolle besteht aus einem Rollenkörper 1, welcher mit einer zentralen Bohrung ausgebildet ist, in welche ein Lager 2 eingesetzt ist, welches von einem Lagerbolzen 3 durchsetzt ist. Da es sich dabei um aus dem Stand der Technik bekannte Bauteile handelt, sind diese nicht weiter erläutert.

Der Rollenkörper 1 ist mit einer zylindrischen Außenfläche 11 ausgebildet, auf welcher sich eine ringförmige Auflage 4 für ein Tragseil bzw. ein Zugseil befindet. Die Auflage 4 ist aus einem sehr harten und druckfesten sowie nahezu nicht elastisch verformbaren Kunststoffmaterial hergestellt. Axial außerhalb der Auflage 4 befinden sich zwei Bordscheiben 5. Weiters sind zwischen der Auflage 4 und den Bordscheiben 5 federnde Einsätze, z.B. Gummiringe 6, vorgesehen. Die Außenfläche 11 des Rollenkörpers 1 ist nahe den beiden Stirnflächen mit jeweils einer ringsumlaufenden Nut 12 ausgebildet, in welche ein Federring 7 eingesetzt ist. Weiters sind die Bordscheiben 5 an ihrer Innenseite mit einer Hinterschneidung 51 od.dgl. ausgebildet, in welcher der jeweils zugeordnete Gummiring 6 gehalten ist.

In Fig. ist die Rolle in ihrer fertig montierten Lage dargestellt. Dabei werden die Bordscheiben 5 durch die federnden Einsätze 6 in axialer Richtung auf die Federringe 7 gepreßt, wodurch sie in ihrer Lage gehalten sind.

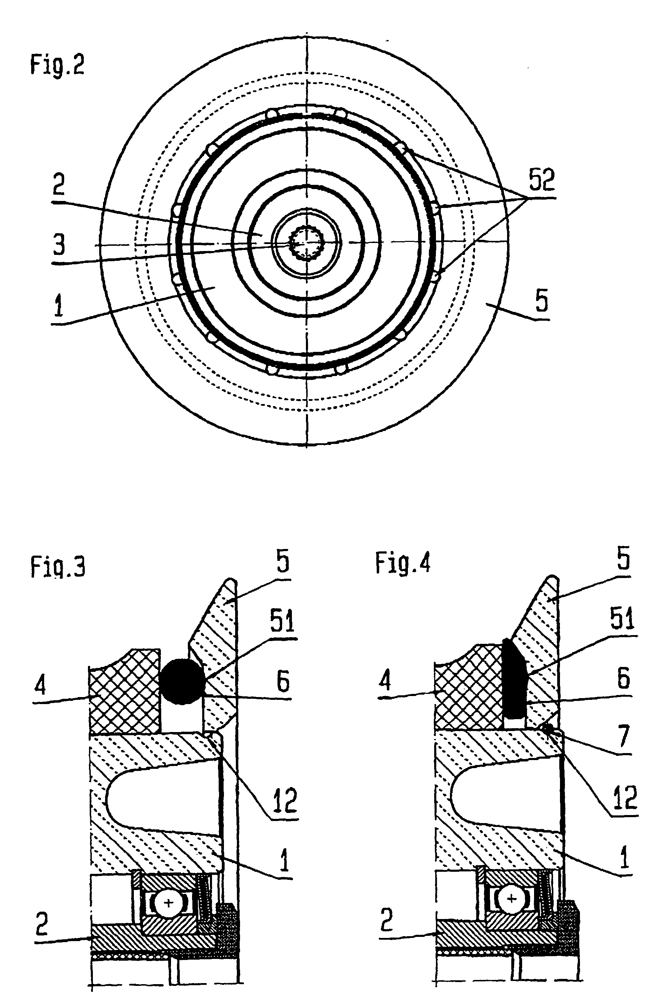

Wie dies aus Fig.2 ersichtlich ist, sind die Bordscheiben 5 an ihren inneren Rändern mit einer Vielzahl von Bohrungen 52 ausgebildet, welche dazu dienen, Kondenswasser aus dem Bereich der Auflage 4 abfließen zu lassen.

Nachstehend ist anhand der Fig.3 und 4 der Montagevorgang erläutert:
Auf dem Rollenkörper 1 befindet sich eine der beiden Bordscheiben 5. Hierauf werden auf diese ein erster Gummiring 6, die ringförmige Auflage 4, ein zweiter Gummiring 6 und die zweite Bordscheibe 5 in axialer Richtung aufgeschoben. Dabei wird die zweite Bordscheibe 5 in axialer Richtung entgegen der Wirkung der Gummiringe 6 so weit aufgeschoben, bis der Federring 12 in die Nut 7 eingesetzt werden kann. Unter Wirkung der Gummiringe 6 werden die Bordscheiben 5 auf die Federringe 7 gepreßt, wodurch sie am Rollenkörper 1 gehalten werden.
Für eine Demontage einer der Bordscheiben 5 braucht diese nur entgegen der Wirkung der Gummiringe 6 so weit axial verschoben zu werden, bis der zugeordnete Federring 12 freigegeben wird. Hierauf kann die Auflage 4 durch eine neue Auflage 4 ersetzt werden.

Somit ist ein Rolle für Seilbahnanlagen geschaffen, welche in sehr einfacher Weise mit einer Auflage aus einem sehr harten und daher nahezu nicht elastisch verformbaren Material versehen werden kann bzw. bei welcher in einfacher Weise ein nicht mehr funktionsfähiges Auflager durch ein neues Auflager ersetzt werden kann.

## Patentansprüche

1. Rolle für ein Laufwerk bzw. für eine Rollenbatterie in einer Seilbahnanlage mit einem Rollenkörper (1), welcher mit einer zentralen Bohrung ausgebildet ist, in welcher sich ein Lager (2) befindet und welches mit zwei Bordscheiben (5) versehen ist, zwischen welchen sich eine nahezu nicht elastisch verformbare, ringförmige Auflage (4) für ein Seil der Seilbahnanlage befindet, wobei mindestens eine der Bordscheiben (5) am Rollenkörper (1) dadurch lösbar befestigt ist, daß die äußere Umfangsfläche des Rollenkörpers (1) im Bereich der anliegenden Stirnfläche desselben mit mindestens einer ringsumlaufenden Nut (12) für einen Federring (7) od.dgl. ausgebildet ist wobei eine Bordscheibe (5) mittels der Auflage (4) auf den Federning (7) gepreßt wird, so daß sie in ihrer Lage gehalten wird, **dadurch gekennzeichnet, daß** zwischen der Auflage (4) und mindestens einer der Bordscheiben (5) ein federnder Einsatz (6) angeordnet ist.

2. Rolle nach Patentanspruch 1, **dadurch gekennzeichnet, daß** mindestens eine der beiden Bordscheiben (5) an ihrer Innenseite mit einer Ausnehmung (51), Hinterschneidung od.dgl. ausgebildet ist, in welcher der federnde Einsatz (6) gehalten ist.

3. Rolle nach einem der Patentansprüche 1 und 2, **dadurch gekennzeichnet, daß** der federnde Einsatz als Gummiring (6) ausgebildet ist.

4. Rolle nach einem der Patentansprüche 1 bis 3, **dadurch gekennzeichnet, daß** die Bordscheibe (5) längs ihrer radial inneren Umrandungen mit Öffnungen (52) für den Abfluß von Kondenswasser ausgebildet sind.

## Claims

1. A roller for a running gear or for a roller battery in an aerial cableway installation, having a roller body (1) which is provided with a central bore in which there is located a bearing (2), and which is provided with two side disks (5), between which there is located an almost completely resiliently undeformable, annular bearing surface (4) for a cable of the aerial cableway installation, at least one of the side disks (5) being attached detachably to the roller body (1) in that the outer circumferential surface of the roller body (1) is provided in the area of the adjacent end face thereof with at least one annularly circumferential groove (12) for a spring washer (7) or the like, one side disk (5) being pressed onto the spring washer (7) by means of the bearing surface (4), such that it is held in position, **characterised in that** a resilient insert (6) is arranged between the bearing surface (4) and at least one of the side disks (5).

2. A roller according to claim 1, **characterised in that** at least one of the two side disks (5) is provided on its inside with a recess (51), undercut or the like, in which the resilient insert (6) is held.

3. A roller according to one of claims 1 and 2, **characterised in that** the resilient insert takes the form of a rubber washer (6).

4. A roller according to one of claims 1 to 3, **characterised in that** the side disk (5) is provided along its radially inner edges with openings (52) for the outlet of condensation water.

## Revendications

1. Poulie pour un train de roues ou pour une batterie de rouleaux dans un téléphérique ayant un corps de poulie (1) qui est formé avec un alésage central dans lequel se trouve un palier (2) et qui est équipée de deux poulies à rebord (5) entre lesquelles se trouve un support (4) presque pas déformable élastiquement, en forme d'anneau pour un câble du téléphérique, moyennant quoi, au moins une des poulies à rebord (5) est fixée de manière amovible sur le corps de poulie (1) en ce que la surface périphérique extérieure du corps de poulie (1) est formée au niveau de la face avant de celui-ci avec au moins une rainure annulaire (12) pour une rondelle élastique (7) ou analogue, moyennant quoi, une poulie à rebord (5)est pressée au moyen du support (4) sur la rondelle élastique (7), de telle sorte qu'elle est maintenue dans sa position, **caractérisée en ce que** entre le support (4) et au moins une poulie à rebord (5) est disposé un insert à ressort (6).

2. Poulie selon la revendication 1, **caractérisée en ce qu'**au moins une des deux poulies à rebord (5) est formée sur son côté intérieur avec un évidement (51), une contre-dépouille ou analogue, dans lequel l'insert à ressort (6) est maintenu.

3. Poulie selon l'une quelconque des revendications 1 et 2, **caractérisée en ce que** l'insert à ressort est constitué par une rondelle de caoutchouc (6).

4. Poulie selon l'une quelconque des revendications 1 à 3, **caractérisée en ce que** les poulies à rebord (5) sont pourvues le long de leurs bordures intérieures radiales d'ouvertures (52) pour l'écoulement de l'eau de condensation.
